# EUROPEAN PATENT APPLICATION

(11) **EP 4 753 084 A2**
(43) Date of publication of application: **03.06.2026**
(21) Application number: 26151652.0
(22) Date of filing: 17.05.2019
(51) Int. Cl.: H01R 25/00

(54) **ELECTRICAL OUTLET COVER WITH INTEGRATED LIGHTING**

(30) Priority: 18.05.2018 US 201815984005; 11.04.2019 US 201916381822
(62) Divisional of application: 19804422.4
(71) Applicant: O'Reilly Winship, LLC, Dallas TX 75251 (US)
(72) Inventor: 0'REILLY, Michael, Dallas, TX 75251 (US); WINSHIP, Donnye, Dallas, TX 75251 (US)
(74) Representative: Barker Brettell LLP

(57) **Abstract**

A lighting device and system having a faceplate and a backplate. The faceplate or the backplate may have an arm or a set of arms having electrical conductors to connect or couple to the electrical contact points of an outlet, plug, or switch. The electrical conductors can receive a voltage from a voltage source such as an AC voltage source. A voltage regulation circuit may provide for the regulation or conversion of the voltage source. A switch can allow for a control circuit connected to the voltage regulation circuit to be bypassed or switch from one operational mode to another operational mode. The operational modes may be in an emergency lighting mode, and a nightlight mode. The voltage source can be connected to a light source or sensor through the control circuit or the switch, and the light source may be activated based on the output of the sensor.

## Description

### CROSS-REFERENCE TO RELATED APPLICATIONS

This application is a continuation-in-part of U.S. Patent Application No. 15/984,005, filed May 18, 2018, which claims the benefit of U.S. Provisional Application No. 62/561,308, filed September 21, 2017, the disclosure of which is hereby incorporated herein by reference.

### TECHNICAL FIELD

The present disclosure relates to light emitting devices. More particularly, and not by way of limitation, the present disclosure is directed to an apparatus, and system for an electrical outlet cover with integrated lighting.

### BACKGROUND

Nightlights, and emergency lighting devices have been around for many years, but each have their own individual downfalls. Nightlights in particular often require at least one electrical outlet or socket to be used, while in some cases both outlets are also used by the nightlight. These lights also can become very hot, and if other items in a room such as a child's blanket or stuffed animal comes in contact with the nightlight for an extended period then a fire hazard, or even an actual fire can result. For emergency lighting, there is typically no manner of operation that allows the light to be utilized in anything other than a power outage. Additionally, these lights typically use at least one if not both outlets of a traditional electrical plug outlet or socket.

One of the additional downfalls of these devices is there is no manner or means for dual operation for a nightlight and emergency lighting. In many cases, a nightlight cannot operate as an emergency light due to a requirement that they be plugged into an outlet or socket that cannot provide power during a power outage. Many nightlights also do not include light detectors or photovoltaic cell to determine when daylight or other light sources are sufficient to turn off and/or allow the nightlight to cool. Conversely, emergency lights are not conducive to use as nightlights because emergency lights require large batteries or other energy sources that can be utilized in the event of a power failure to produce a strong or high intensity light, along with circuitry to detect when a power failure occurs. These emergency lights are also often connected together to the battery backup system for an entire building, but cannot provide lighting to pathways or in rooms that are not connected to the battery backup system.

It would be advantageous to have an apparatus, and system for an electrical outlet cover with integrated lighting that overcomes the disadvantages of the prior art. The present disclosure provides such an apparatus and system.

### BRIEF SUMMARY

The present disclosure is directed to a lighting device. The lighting device may be utilized throughout homes, businesses, storage areas, and any place where electrical power can be provided. The lighting device may receive an electrical power signal from an electrical power source. Thus, in one aspect, the present disclosure is directed to a lighting device incorporated within an electrical outlet or socket cover. The lighting device can receive electrical power from an electrical outlet via the contact points of the plug, outlet and/or switch.

In another aspect, the present disclosure is directed to a nightlight device incorporated within an electrical outlet or socket cover. To provide a small amount of light for those such as, small children or those that have to get up during the night. In yet another aspect, the present disclosure is directed to an emergency light for use during a power failure. When a power failure occurs the lighting device may activate its light source to provide light to the area and environment it has been placed.

### BRIEF DESCRIPTION OF THE DRAWINGS

The novel features believed characteristic of the disclosure are set forth in the appended claims. The disclosure itself, however, as well as a preferred mode of use, further objectives and advantages thereof, will be best understood by reference to the following detailed description of illustrative embodiments when read in conjunction with the accompanying drawings, wherein:
**FIG. 1A** is an illustration of an outlet cover in a front perspective view.
**FIG. 1B** is an illustration of an outlet cover in a rear perspective view.
**FIG. 2** is an illustration of an outlet cover in a rear exploded view.
**FIG. 3** is an illustration of an outlet cover in a front view.
**FIG. 4** is an illustration of an outlet cover in a side view.
**FIG. 5** is an illustration of a light source.
**FIG. 6A** is an illustration of an alternative outlet cover in rear perspective view.
**FIG. 6B** is an illustration of an alternative outlet cover in rear perspective view.
**FIG. 7** is an illustration block diagram view of a light emitting device.
**FIG. 8A** is an illustration of a schematic for a portion of a light emitting device.
**FIG. 8B** is an illustration of a schematic for a portion of a light emitting device.
**FIG. 9A** is an illustration of a front perspective view of an outlet cover with a directional indicator.
**FIG. 9B** is an illustration of a rear perspective view of an outlet cover with a directional indicator.
**FIG. 10** is an illustration of a front view of an outlet cover with directional indicators.
**FIG. 11** is an illustration of a block diagram view of an outlet cover system.
**FIG. 12** is an illustration of a front view of an outlet cover with directional indicators.
**FIG. 13A** is an illustration of a light source for an outlet cover.
**FIG. 13B** is an illustration of a light source with extensions for an outlet cover.

### DETAILED DESCRIPTION

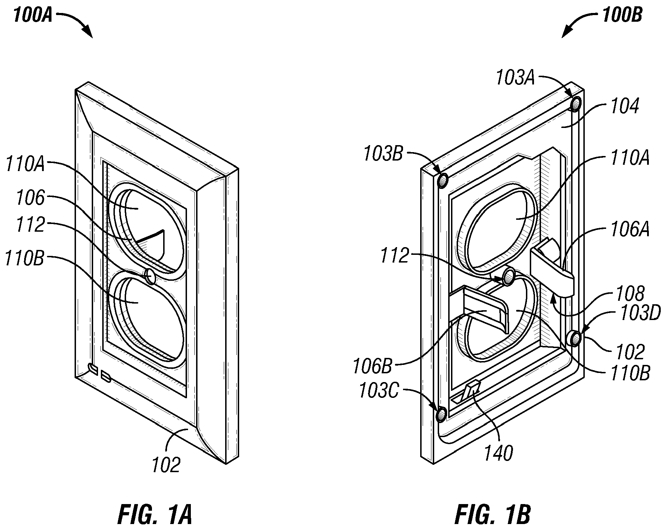

An embodiment of the disclosure will now be described. **FIG. 1A** is an illustration of an outlet cover **100A** in a front perspective view. The outlet cover **100A** may have a faceplate **102.** The faceplate **102** can also have an outlet opening or set of outlet openings **110A** and/or **110B.** The faceplate **102,** in one embodiment of the present disclosure would be a faceplate for an electrical outlet, but it would be understood that other faceplates and/or covers could also be replaced with the outlet cover **100A.** The other faceplates and/or openings, could include, but are not limited to, electrical outlets, light switches, alarm boxes, thermostats, and/or objects or devices connected to electrical power.

The faceplate **102** and/or backplate (not illustrated) may also have an arm **106** extending from, affixed to, or attached to the outlet cover **100A.** The arm **106** can also have an electrical conductor that may attach to a power source, or electrical energy to power a nightlight and/or emergency light circuit. The outlet cover **100A** can be connected to an electrical outlet or switch through a fastener opening **112.** The fastener opening, may allow for any number of fasteners, such as, but not limited to, screws, nails, clips, adhesives, glues, synthetic materials, dovetail, tongue and groove, post and hole, snaps or a snap like connection, or any other attachment means or method, or any combination thereof.

**FIG. 1B** is an illustration of an outlet cover **100B** in a rear perspective view. The outlet cover **100B** may have a faceplate **102,** and can also have a backplate **104,** that in one embodiment of the present disclosure may be removably coupled. The backplate **104** may be removably coupled to the faceplate **102** through a set of fasteners **103A, 103B, 103C,** and/or **103D** (collectively **103).** It would be understood that the faceplate **102,** and the backplate **104** may also be removably coupled through other fasteners such as screws, nails, clips, adhesives, glues, synthetic materials, dovetail, tongue and groove, post and hole, snaps or a snap like connection, or any other attachment means or method, or any combination thereof.

The backplate **104** may also a first arm **106A** and/or a second arm **106B** (collectively an arm **106,** or an at least one arm). The arm **106** can extend from, be attached and/or affixed to the backplate **104** via a fastener(s). The arm **106** may also have an electrical conductor **108** (or at least one electrical conductor) attached, affixed, or housed within the arm **106.** The electrical conductor **108,** may include, but is not limited to having a bump, square, spring, block, tab, or other electrical conducting material and/or shape. The electrical conductor **108** can attach or connect to a power source, or electrical signal. In one embodiment of the present disclosure, the power source, or electrical signal may be an Alternating Current ("AC") voltage.

The power source and/or electrical signal may result from replacing a traditional outlet or switch cover or faceplate with the outlet cover **100B.** The outlet and/or switch can be placed through the outlet openings **110A** and/or **110B.** It would be understood that different configurations of the outlet opening(s) could also be utilized such as, but not limited to, a single plug or switch configuration, a double plug or switch configuration, a triple plug or switch configuration, a quad plug or switch configuration, and/or as may plugs or switches as may be used in a particular configuration. The outlet cover **100B** can be attached to an outlet or switch through a fastener opening **112,** and additional openings may be utilized if a different plug and/or switch configuration is utilized.

In one embodiment of the present disclosure, a switch **140** may be utilized to switch or shift between multiple operating modes of the outlet cover **100B.** The switching or shifting between multiple operating modes may be an instantaneous or approximately instantaneous switching or shifting. The switch **140** may be attached, affixed, and/or housed within the faceplate **102** and/or the backplate **104.** The operating modes can include, but are not limited to, a nightlight mode and/or an emergency lighting mode.

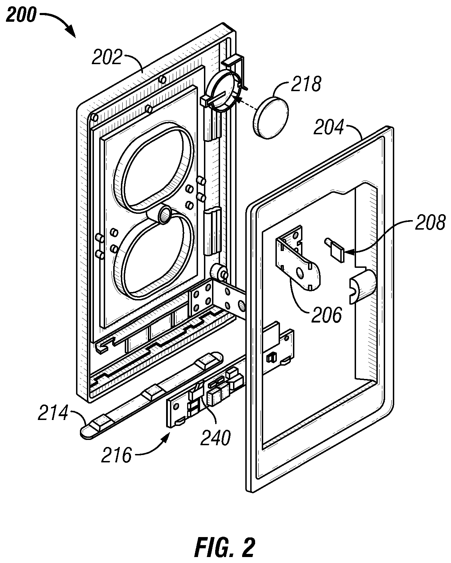

**FIG. 2** is an illustration of an outlet cover **200** in a rear exploded view. The outlet cover **200** may be comprised of a faceplate **202,** and/or a backplate **204.** The faceplate **202,** and/or backplate **204** may also connect, affix, attach, and/or comprise an arm **206.** The arm **206** may have an electrical conductor **208** connected, affixed, attached, and/or housed within it. The arm **206,** and/or the electrical conductor **208** may also have wires or other electrically conductive materials affixed, attached, and/or housed within them

The outlet cover **200** may also have a light source **214** for producing, generating, and/or emitting light. A control circuit **216** can control when and/or if the light source **214** is active. The control circuit **216** may also be connected to a battery **218.** The battery **218** can allow for the storing of energy from an incoming voltage source. The light source **214,** the control circuit **216,** and/or the battery **218** can be connected, attached, affixed, and/or housed within the outlet cover 200. For example, in one embodiment of the present disclosure the light source **214,** the control circuit **216,** and/or the battery **218** may be removably connected, attached, affixed, and/or housed within the faceplate **202.** Alternatively, the light source **214,** the control circuit **216,** and/or the battery **218** may be removably connected, attached, affixed, and/or housed within the backplate **204.**

The battery **218** may be connected to the power source, and/or electrical signal through the control circuit **216.** Alternatively, the battery may also be connected directly or indirectly to the electrical conductor **208** through wires or other electrically conductive materials. The battery **218** may also provide energy and/or power to the light source **214.** In one embodiment of the present disclosure, the light source **214** may be directly or indirectly connected to the power source, and/or electrical signal. The light source **214** may be housed or enclosed within the faceplate **202,** and/or backplate **204** such that an opening may be created that is defined by the faceplate **202** and/or the backplate **204.** The control circuit **216** may also have a switch **240** that may control if the outlet cover **200** can operate in a nightlight or emergency light mode of operation, or some other mode of operation as well.

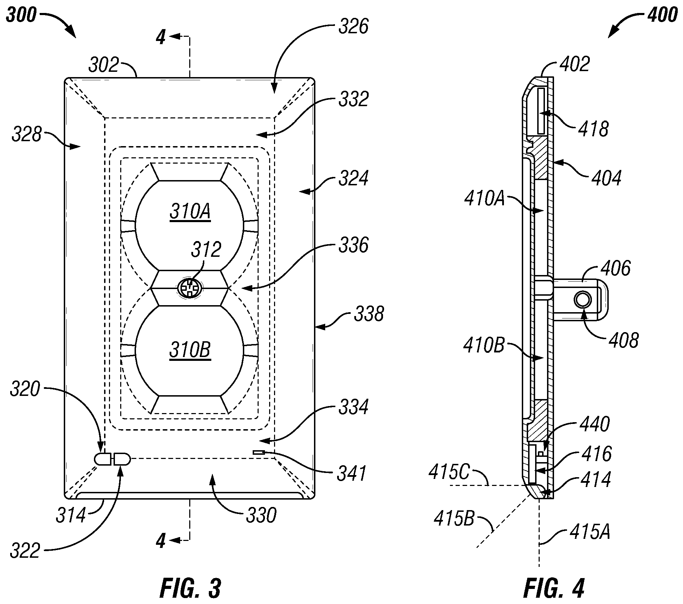

**FIG. 3** is an illustration of an outlet cover **300** in a front view. The outlet cover **300,** may have a faceplate **302,** which may also be described as a cover, a switch or outlet faceplate, or a switch or outlet cover. The faceplate **302** may have, or define at least one outlet opening **310A** and/or **310B** (collectively **310).** While depicted as an oblong oval or rectangle, it would be understood that any shape could be utilized for the opening(s) and/or to define an opening or aperture such as, but not limited to, a square, sphere, cylinders, polygons, ellipses, crescents, cubes, cuboids, ellipsoids, cones, prisms, pyramids, or combinations thereof.

The faceplate **302** may also have or define a fastener opening **312** that may be utilized to place a fastener, such as, but not limited to a screw, a bolt, a nail, adhesives, glues, synthetic fasteners, metallic fasteners, wood fasteners, alloy fasteners, wood fasteners, other forms or types of fasteners, and/or any combination thereof. The faceplate **302** can also have a light source **314,** which in one embodiment may include a light bar, and/or a combination of light bulbs or light emitting diodes such as, but not limited to, LEDs, and/or OLEDs (or at least on LED or OLED). An indicator **320,** and/or a sensor **322** may also be housed within the faceplate **302** and/or backplate (not illustrated), or have an aperture, housing, and/or void defined by the faceplate **302** and/or backplate (not illustrated). The indicator **320** can be utilized, but not limited to, informing a user when a power source is providing power and/or energy to the outlet cover **300,** when the battery is active, and/or which mode the outlet cover is operating in. The indicator **320** may also be placed in aperture defined by the faceplate **302,** and/or backplate **304,** or affixed to the faceplate **302** directly or through a lens. The sensor **322** (or at least one sensor) may include but is not limited to, a light sensor, photo resistor, photodiode, and/or phototransistor, for detecting and/or measuring the amount of ambient light, or other environmental conditions in a local environment. The sensor **322** may also be placed in aperture defined by the faceplate **302,** and/or backplate **304,** or affixed to the faceplate **302** directly or through a lens to allow it to respond to environmental conditions. In one embodiment, the sensor **322** may also include at least one sensor or other environmental sensors such as, but not limited to, humidity, temperature, air quality, carbon dioxide, carbon monoxide, nitrogen dioxide, vibration, accelerometer, microphones, sound detection, gas sensors, pressure sensors, tilt sensors, weather, and/or other sensors that may include or provide a signal or indication of an environmental event.

A sound emitter **341** may also be housed within the faceplate **302** and/or backplate (not illustrated), or have an aperture, housing, and/or void defined by the faceplate **302** and/or backplate (not illustrated). The sound emitter **341** can be coupled to the control circuit (not illustrated) and allow for a sound to be emitted continuously or intermittently from the outlet cover **300** for a specified amount of time, such as but not limited to, 10 seconds, 15 seconds, 30 seconds, 1 minute, 3 minutes, 5 minutes, 10 minutes, 15 minutes, and/or 30 minutes after a power failure has occurred and the power has not been restored.

In one embodiment of the present disclosure, the outlet cover **300** may have a front surface **338** that may comprise a first angled section **324,** a top angled section **326,** a second angled section **328,** a bottom angled section **330,** a top flat section **332,** a bottom flat section **334,** or a middle flat section **336.** The angled sections **324, 326, 328,** and/or **330** may in one embodiment of the present disclosure, provide an outer boundary of the faceplate **302.** Wherein the flat sections **332, 334,** and/or **336** can provide an area for the outlet opening(s) **310.** It would be understood, that in alternative embodiments the angled sections may also be rounded, flat, and/or squared, or any other decorative profile and/or shape, while the flat surfaces may in alternative embodiments can be angled, rounded, textured, or any other decorative profile and/or shape.

**FIG. 4** is an illustration of an outlet cover **400** in a side view. The outlet cover **400,** may have a faceplate **402,** and/or a backplate **404.** The faceplate **402,** and the backplate **404** may be connected or coupled together through fasteners (not shown). The faceplate **402,** and/or the backplate **404** may also define or provide for an outlet opening(s) **410A/410B.** An arm **406** can be connected, affixed, and/or coupled to the faceplate **402,** or the backplate **404.** In alternative embodiments of the present disclosure, the arm **406** may be made, manufactured, or formed with the faceplate **402,** or the backplate **404.**

An electrical conductor **408** may be housed within, affixed, connected, or coupled with the arm **406.** The electrical conductor **408** can be a rounded button, or bump that can have any number of shapes or profiles that would allow it to touch, couple, and/or connect to a power source. The electrical conductor **408** may also have wires or other conductors coupled to it, in order to couple or connect it to a control circuit **416,** and/or a battery **418.** The control circuit **416** can control the operational mode (or at least one operational mode) of the outlet cover **400,** and/or the light source **414.** The light source **414** may generate or emitting light in any number of directions, in one embodiment the light source may generate light in a downward or 0 degree position **415A.** While in other embodiments, the light might be generated in a horizontal or 90 degree position **415C,** or any number of angles or position **415B** in between such as, but not limited to 30 or 45 degree positions. The positions are referred to and/or relative to a downward position, with the angle be extended in a rotational arc upward and forward (front side) of the outlet cover **400.** For example, if the outlet cover is placed in an electrical outlet, with the light source on the bottom side of the outlet cover (i.e., the light source is facing the floor) then the light in these various positions could light the baseboards in the downward position, to the opposite side of a hallway or room in the horizontal position. The operational modes (or at least two operational modes) can include, but are not limited to, a nightlight mode, and/or an emergency light mode. The operational modes may be switched and/or added together by a switch **440.**

In one embodiment of the present disclosure, the outlet cover **400** may be in the nightlight operational mode, allowing a light source **414** to generate light based on a sensor indicating when the room or location is no longer sufficiently lighted. The nightlight mode may also include the emergency lighting mode in alternative embodiments or may be used exclusively without the emergency lighting mode. The emergency lighting mode may be activated when there is no power or energy provided to the control circuit **416** by the electrical conductor(s) **408.** The operational modes may be used exclusively or in combination.

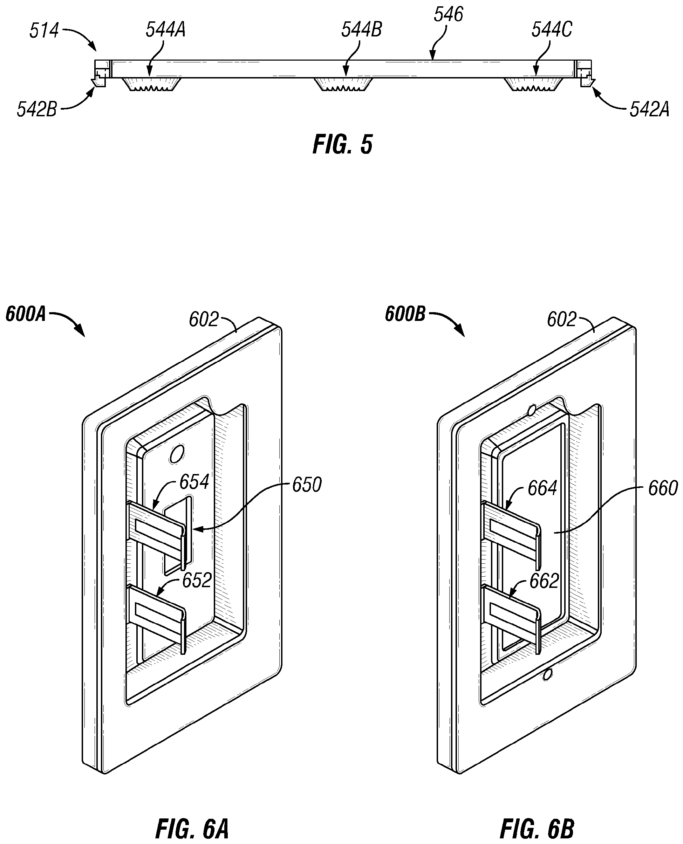

**FIG. 5** is an illustration of a light source **516.** The light source may be connected, coupled, and/or affixed to an outlet cover (not shown). In one embodiment of the present disclosure, the light source **516** may be clipped via clip **542A** and/or clip **542B** within the light emitting device. The light source **516** can also have at least one light bulb, wherein the light bulb is illustrated as light bulb **544A,** light bulb **544B,** and/or light bulb **544C** (collectively light bulbs **544).** It would be understood that these light bulbs may include any number of light emitting sources, including, but not limited to LEDs, OLEDs, and other types or forms of bulbs, or any combinations thereof. For example, the at least one light bulb, may be an at least one LED. These light bulbs may also be set at various angles to produce varying degrees, and/or distributions of light. In an alternative embodiment of the present disclosure, each of the light bulbs may be set at a different angle, e.g., light bulb **544A** may be set at a downward or 0 degree position, while light bulb **544B** is set at a 30 degree position, and/or light bulb **544C** is set at a 45 degree position. In another alternative embodiment, the light bulbs may each have varying degrees of light distribution based on their construction or manufacturer. For example, light bulbs **544A** and/or **544C** may have a 15 degree light distribution angle, while light bulb **544B** has a light distribution angle of 30 degrees allowing for a broader or more expansive light distribution. In another embodiment, a lens **546** may also be utilized to control, and/or vary the light distribution of light bulbs **544,** while it would be understood that the lens **546** may also be split, sectioned, and/or have portions that may vary the light distribution of each individual light bulb.

**FIG. 6A** is an illustration of an alternative outlet cover **600A** in rear perspective view. The outlet cover **600A** may have a faceplate **602,** and/or a backplate **604.** The faceplate **602,** and backplate **604** may be attached, connected, and/or coupled together via a fastener. The faceplate **602,** and/or backplate **604** may allow for, provide, and/or define a switch opening **650** to allow for a light switch, such as, but not limited to a flip or toggle switch, or a single pole, or double pole switch.

The faceplate **602,** and/or backplate **604,** may have a first arm **652** or a second arm **654** attached, coupled, connected, and/or affixed to them. In one embodiment of the present disclosure, the first arm **652** may touch and/or couple with one electrical conductor or power source nodes via an electrical conductor (not shown). Similarly, the second arm **654** may touch and/or couple with one electrical conductor or power source nodes via an electrical conductor (not shown).

**FIG. 6B** is an illustration of an alternative outlet cover **600B** in rear perspective view. The outlet cover **600B** may have a faceplate **602,** and/or a backplate **604.** The faceplate **602,** and backplate **604** may be attached, connected, and/or coupled together via a fastener. The faceplate **602,** and/or backplate **604** may allow for, provide, and/or define a switch or outlet opening **660** to allow for a light switch, such as, but not limited to a rocker switch, a switch and/or sensor, a flip or toggle switch, or a single pole, or double pole switch.

The faceplate **602,** and/or backplate **604,** may have a first arm **662** or a second arm **664** attached, coupled, connected, and/or affixed to them. In one embodiment of the present disclosure, the first arm **662** may touch and/or couple with one electrical conductor or power source nodes via an electrical conductor (not shown). Similarly, the second arm **664** may touch and/or couple with one electrical conductor or power source nodes via an electrical conductor (not shown).

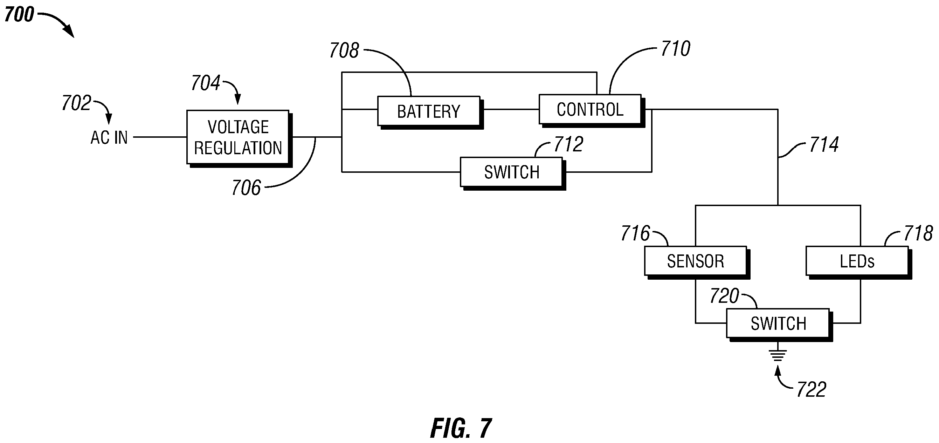

**FIG. 7** is an illustration block diagram view of an outlet cover system **700.** The outlet cover system **700** may have an incoming voltage source **702** that can in one embodiment of the present disclosure be an Alternating Current or AC voltage source. In one embodiment of the present disclosure, the incoming voltage source **702** may be received by an at least one conductor (not shown). The incoming voltage source **702,** may be regulated and/or converted to a DC operating voltage by a voltage regulation circuit **704** to regulate the incoming voltage from the incoming voltage source **702.** The output of the voltage regulation circuit **704** can be a regulated voltage **706,** the regulated voltage can be, but is not limited to, sent to a battery **708,** a control circuit **710,** and/or a switch **712.** The battery **708,** can in alternative embodiments of the present disclosure be coupled and/or connected to a battery charging circuit that may utilize the regulated voltage **706.** The control circuit **710** can allow the outlet cover system **700** to provide a light source during a power outage by activating the battery, and/or opening a connection or coupling between the light source and the battery **708.** The control circuit **710** may in one embodiment of the present disclosure also include the switch **712.**

The switch **712** allows the battery and/or control circuit **710** to be bypassed and the regulated voltage to be passed to the input voltage node **714.** The switch **712** may allow for the controlling a connection between the light source **718,** the battery **708,** and the regulated voltage **706.** The input voltage node **714** may provide a voltage to a sensor **716,** and/or a light source **718.** The sensor **716,** can be connected to a switch **720** that may be connected to the light source **718,** with all of these being coupled to a ground **722.** The sensor **716,** may include, but is not limited to, a light sensor, a photo resistor, a photodiode, and/or a phototransistor.

It would be understood, that a ground **722** can be placed within the circuit at any number of points and could also be illustrated by more than one ground. The switch **712** may prevent a current from passing through the light source **718** when a sufficient level of light is detected within the room or environment that the outlet cover system is placed in. For example, when utilized in a nightlight operational mode, the sensor **716** may prevent the light source from operating if an additional light, and a sufficient amount of sunlight has entered the room. Alternatively, in an emergency lighting operational mode the sensor **716** may be utilized to conserve the battery **708,** and allow for the light source to be utilized for the maximum number of days, hours, and/or minutes. In alternative embodiments of the present disclosure, the battery and/or control circuit may be considered an emergency lighting circuit, while the switch **712,** and/or the sensor **716** may be considered a nightlight circuit.

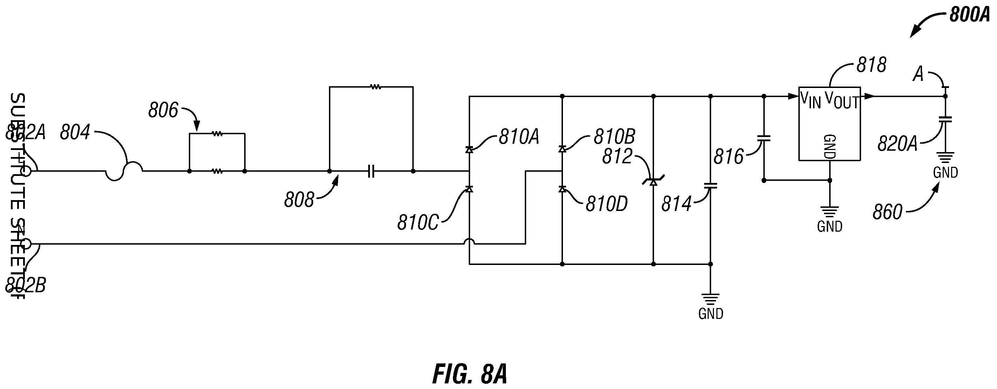

**FIG. 8A** is an illustration of a schematic for a portion of an outlet cover system **800A.** The outlet cover system may have a high power source input **802A,** and a low power source input **802B,** it would understood that in alternative embodiments the low power source input **802B** may also be considered a ground **860.** However, in alternative embodiments it may be the neutral, or a second "hot" line of an AC voltage. The high power source input **802A** may be coupled to a fuse **804.** The fuse **804** would be of a sufficient size to prevent an overcurrent, and/or an overvoltage from occurring within the circuit.

Coupled to the fuse **804** may be a resistance **806,** the resistance may have at least one resistor, or may have a combination of resistors in series and/or parallel to create a specific desired resistance value. The resistance **806** may be coupled with a resistance, and/or capacitor or and RC block **808.** It would be understood that the R in RC would stand for resistance or a resistor, and the C would stand for capacitance or a capacitor. The resistance and capacitance while illustrated in a parallel configuration, could be in a series, and a combination of series and parallel to create the desired resistance and capacitance combination.

The RC block **808** may be coupled between diode **810A** and/or diode **810C,** while the low power source input **802B** may be coupled between diodes **810B** and/or diode **810D.** It would be understood that diodes **810A, 810B, 810C,** and/or **810D** collectively would be a bridge rectifier **810.** The bridge rectifier **810** may be utilized to convert an AC voltage to a DC voltage. The output of the bridge rectifier **810** may include a diode **812,** which can in one embodiment of the present disclosure be a Zener diode, and/or a capacitor **814** that may be in a series and/or parallel configuration, or a combination thereof. A voltage regulator **818** may be utilized to maintain a specific voltage, and/or condition the DC voltage from the bridge rectifier. A capacitor **816** can be utilized to smooth or remove transients from the input of the voltage regulator **818,** by coupling the input of the voltage regulator **818** to ground via the capacitor **816.** Similarly, a capacitor **820A** can be utilized to smooth or remove transients from the output of the voltage regulator **818,** by coupling the output of the voltage regulator **818** to ground via the capacitor **820A.** The node A may be used as a reference to connections or nodes throughout the circuit that may have the same voltage or current as node A.

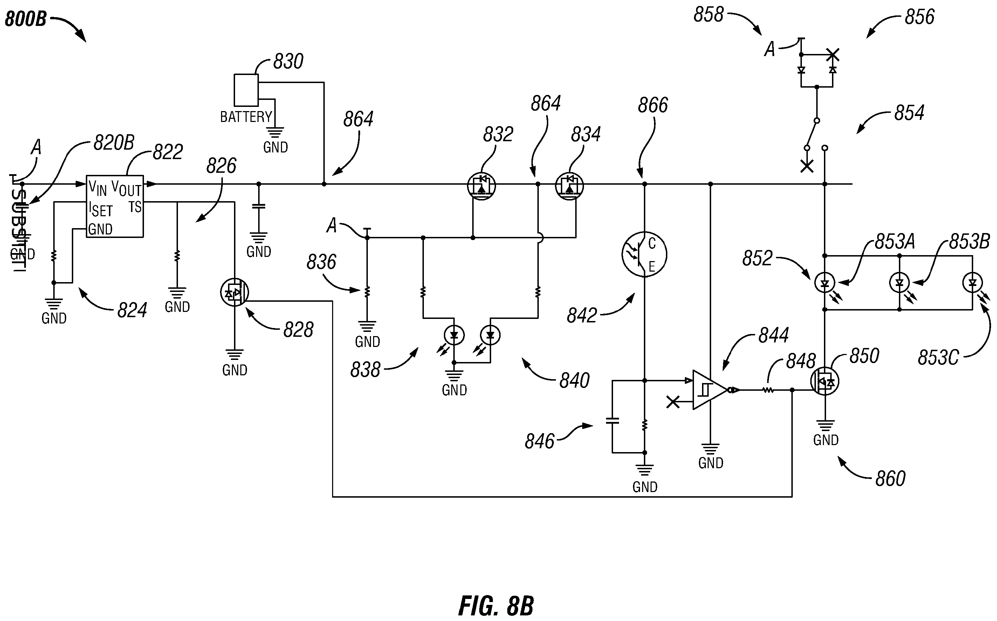

**FIG. 8B** is an illustration of a schematic for a portion of an outlet cover system **800B.** The portion of the outlet cover system **800B** illustrated in **FIG. 8B** is connected and/or coupled to the portion of the outlet cover system **800A** illustrated in **FIG. 8A** by node A. It would be understood, that these portions may be one circuit, and/or multiple circuits coupled together.

Node A is coupled to a battery charger **822** that may receive the regulated voltage at its voltage input terminal. The output voltage of the battery charger **822** may run to a battery **830,** or an at least one battery, as more than one battery may be utilized in alternative embodiments of the present disclosure. The battery charger **822** may have additional inputs and/or outputs. These inputs and outputs may be connected or coupled to ground via resistance **824,** resistance **826,** and/or capacitors **820B.** The output of the battery charger **822,** while connected or coupled to the battery **830,** the output may also be coupled or connected to a transistor **832.** A second transistor **834** may also be coupled directly or indirectly to the output of the battery charger **822.**

The transistor **832** may be coupled to the output of the battery charger **822,** Node A, and/or transistor **834.** The transistor **832** is configured to prevent additional voltage and/or current from being connected or coupled to the battery **830** at node **868,** while it may also allow for the battery **830** to be connected or coupled to a light source. The transistor **834** allows for a current and/or voltage to sense or seen at the sensing node **864** that can be between the transistors **832/834.** A first diode **838** may be coupled to node A, while a second diode **840** may be coupled to the sensing node **864.** The first diode **838** and the second diode **840** may in one embodiment of the present disclosure be a Light Emitting Diodes or LEDs, however, other light emitting elements may also be substituted. The first diode **838** may provide an indication when the outlet cover system **800A/800B** is connected and/or coupled to a power source or an AC voltage. The second diode **840** may provide an indication of when the battery is being utilized in the event of a power failure.

The transistor **834** can be coupled to a sensor **842,** a switch **854,** and/or a light source **852** at a node **866.** The sensor **842** can be a light sensor, a photo resistor, a photodiode, a phototransistor, or other forms of light detecting sensors. The sensor **842** may provide for the detection of light, and/or allow current to pass through as light may be sensed by the sensor. The sensor **842** may be coupled to a comparator **844,** and/or a RC block **846.** The RC block **846** may be utilized to smooth, or limit the amount of current and/or voltage on an input node of the comparator **844.** The comparator **844** may have at least two inputs, and at least one output. The first input may be coupled to the sensor **842**; the second input may be left floating or have a null value coupled to it, and the output may be coupled to a transistor **828,** a transistor **850,** and/or a resistance **848.** The output of the comparator may trigger when the sensor **842** indicates that it no longer senses sufficient light within the local environment, while alternatively the comparator may also trigger when the sensor **842** indicates that it sense sufficient light within the local environment. The output of the comparator **844** may cause the transistor **850** to couple the light source **852** to ground, and thus allowing current to pass through the light source **852.**

The light source **852** may be comprised of at least one light bulb, wherein the at least one light bulb may be a Light Emitting Diode or LED, or an Organic LED or OLED. In one embodiment of the present disclosure, the light source **852** may be comprised of light bulb **853A,** light bulb **853B,** and/or light bulb **853C.** The light source **852** may be coupled to the transistor **850,** a switch **854,** the sensor **842,** and/or the transistor **834.** The switch **854** may allow the regulated voltage to be coupled directly or indirectly to the light source **852.** The switch **854** may be a physical switch that a user may move to indicate whether the switch connects or disconnects the regulated voltage from the light source. When the switch is in a disconnected position, the outlet cover system **800A/800B** may be in an emergency lighting operational mode, wherein the outlet cover system **800A/800B** can utilize an emergency light circuit that may comprise, but is not limited to, the battery **830,** the transistor **832/834,** and the light source **852.** When the switch **854** is in the connected state, the outlet cover system **800A/800B** may operate in a nightlight operational mode wherein the outlet cover system **800A/800B** can nightlight circuit that may include, but is not limited to, the sensor **842,** the comparator **844,** and the light source **852.**

The switch may be coupled to a diode block **856** that may be utilized to prevent voltage and/or current from being seen on the regulated voltage output of the voltage regulator (not shown). The battery charger **822** may have an input connected or coupled to a resistance **826,** and/or a transistor **828.** In one embodiment of the present disclosure, the transistor **828** can be coupled to the output of the comparator **844.** Node A may also be referenced as node A **858.**

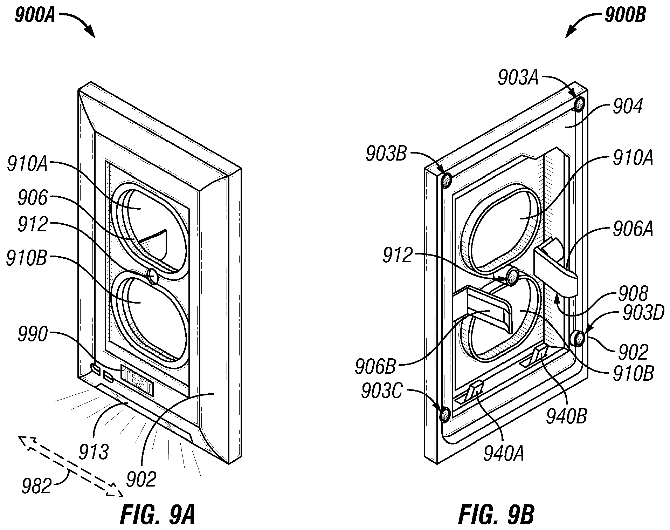

**FIG. 9A** is an illustration of an outlet cover **900A** with a directional indicator **982.** The outlet cover **900A** can have a faceplate **902.** The faceplate **902** can define outlet openings **910A** and/or **910B** (collectively **910).** In some embodiments, the outlet openings **910** may also include switch openings, dimmer openings, usb outlet openings, audio connector openings, video connector openings, and/or other openings defined by the faceplate **902** that would allow for a cable and/or connector to pass through the faceplate. The outlet cover **900A** may also have an arm **906.** In at least one embodiment, the arm **906** incudes a conductor housed within it that allows for the coupling of the outlet cover **900A** with an electrical system (not illustrated). The electrical system may be a house, and/or building electrical system that may include AC and/or DC voltage or currents. The outlet cover **900A** may be coupled to an electrical outlet (not illustrated) through a fastener (not illustrated) and a fastener opening **912.**

In at least one embodiment, the outlet cover **900A** has a light source **913.** The light source **913** may include at least one Light Emitting Diode (LED). In some embodiments, the light source **913** may also have a directional indicator **982.** The directional indicator **982** may include arrows indicating a direction to the right or left of an axis traversing the outlet openings **910,** and/or to the right or left of the outlet cover **900A.** The directional indicator **982** may be dual directional and/or indicating that both directions can be utilized for an exit, or the directional indicator **982** may include a single direction as selected by a user before the outlet cover **900A** is installed. In at least one example, the outlet cover **900A** may have a test button **990.** The test button **990** can also include a test circuit (not illustrated) to allow for testing a power source coupled to the outlet cover **900A,** such as a AC power source or a battery. The test button **990** may be coupled to a power source, and/or a battery.

**FIG. 9B** is an illustration of a rear perspective view of an outlet cover **900B.** The outlet cover **900B** includes a backplate **904.** While the backplate **904** may be molded, glued and/or secured to the faceplate (not illustrated), it may also be secured with fastener(s) **903A, 903B, 903C,** and/or **903D** (collectively **903).** In some embodiments, one fastener may be utilized, while in other embodiemnts more than one fastener **903** may be utilized. The backplate **904** may define an outlet opening **910A,** and an outlet opening **910B** (collectively **910).** The outlet opening(s) **910** may also be switch openings, cable connector openings, audio/video connector openings, and/or other openings for various connectors and/or objects. The outlet cover **900B** may also be fastened to an outlet device (not illustrated) with a fastener (not illustrated) through a fastern opening **912** that is defined by the outlet cover **900B.** The outlet cover **900B** can have arm(s) **906A,** and/or **906B** (collectively **906)** that extend rearward from the backplate **904.**

The outlet cover **900B** can also have a first switch **940A** and a second switch **940B.** In at least one embodiment, the first switch **940A** can be utilized to know which operational mode the outlet cover **900B** is operating in. For example, the outlet cover **900B** may operate in a nightlight mode that turns the light on when the light level in the room and/or location of the outlet cover **900B** drops below a threshold, and a emergency lighting mode that turns on when there is no power detected at the outlet device, and the light level drops below a threshold. The second switch **940B** can indicate which direction a directional indicator (not illustrated) may indicate. For example, the switch **940B** may be in a right or first position that indicates that a right arrow will be indicated, a second or neutral position for indicating that both directions will be indicated and a third position or left position to indicate that a left arrow will be indicated. It would be understood that these directions are for illustrative purposes and a right position may indicate a left arrow, and a left position may indicate a right arrow.

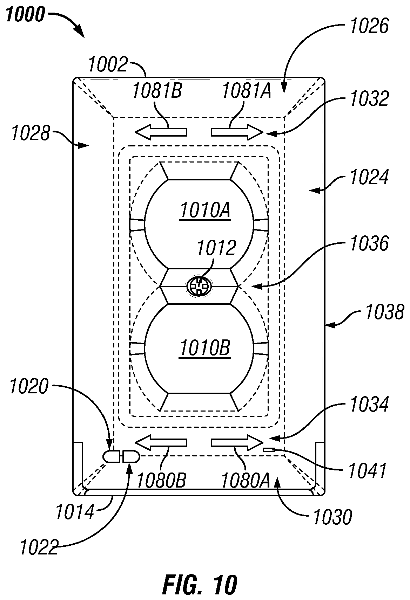

**FIG 10** is an illustration of a front view of an outlet cover **1000.** The outlet cover **1000** can include a faceplate **1002.** The faceplate **1002** can have angled sections **1024, 1026, 1028,** and/or **1030.** The angled sections **1024, 1026, 1028,** and/or **1030** can provide support, and a housing for the light source **1014,** indicator **1020,** sensor **1022,** and/or other additional circuitry. The outlet cover **1000** can also have flat sections **1032,** and/or **1034** that can provide support, and a housing for directional indicators **1081A** and/or **1081B** (collectively **1081)** and/or directional indicators **1082A** and/or **1082B** (collectively **1082).**

The angled sections and the flat sections can also define the outlet openings **1010A** and/or **1010B.** In at least one example, the outlet cover **1000** can be secured with a fastener (not illusted) throught fastener opening **1012.** The outlet cover **1000** may also have a indicator **1020** that allows a user to know when the outlet cover **1000** is connected to an electrical power source. For example, the indicator may turn green when the outlet cover **1000** is connected to power, but may turn red or off when the outlet cover **1000** is not connected to power or there is a power outage. The outlet cover **1000** may also have a sensor **1022** for detecting the ambient light. For example, if the light in a room exceeds a threshold level as recorded and/or sensed by the sensor **1022** then the light source **1014** may be turned off. Alternatively, if the light in a room or location drops below a threshold level as recorded and/or sensed by the sensor **1022** then the light source **1014** may be turned on. In at least one embodiment, when the light source **1014** is turned on one or more of the directional indicator(s) **1080,** and/or **1081** may also be activated. In another example, the sensor **1022** may also include an environmental quality sensor such as a smoke or air quality sensor that when triggered (the air quality is below a threshold value, or when a smoke senser detects smoke above a threadshold value) then both directional indicator **1080** and **1081** will turn on. It should be noted that a user (not illustrated) may select a single direction, right directional indicator **1080A** and/or **1081A,** a left directional indicator **1080B** and/or **1081B,** or both directions directional indicators **1080A, 1080B, 1081A,** and **1081B.** The outlet cover **1000** may also have a sound emitter **1041,** capable of producing an audible alarm or sound to indicate when there is a power outage, or if there is an environmental condition that a user (not illustrated) should be notified about. For example, when a fire and/or smoke is detected.

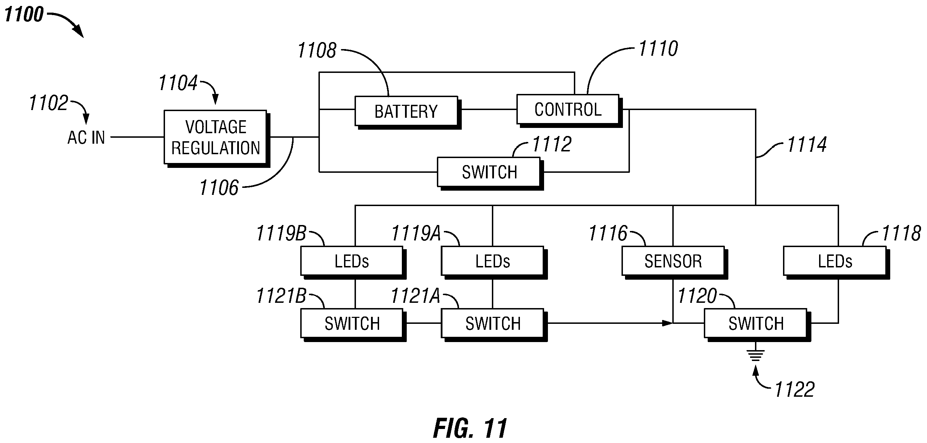

**FIG. 11** is an illustration of a block diagram view of an outlet cover system **1100.** The outlet cover system **1100** may have an incoming voltage source **1102** that can in one embodiment be an Alternating Current or AC voltage source. In another embodiment, the incoming voltage source **1102** may be received by an at least one conductor (not shown). The incoming voltage source **1102,** may be regulated and/or converted to a DC operating voltage by a voltage regulation circuit **1104** to regulate the incoming voltage from the incoming voltage source **1102.** The output of the voltage regulation circuit **1102** can be a regulated voltage **1106,** the regulated voltage can be, but is not limited to, sent to a battery **1108,** a control circuit **1110,** and/or a switch **1112.** The battery **1108,** can in alternative embodiments be coupled and/or connected to a battery charging circuit that may utilize the regulated voltage **1106.** The control circuit **1110** can allow the outlet cover system **1110** to provide a light source during a power outage by activating the battery, and/or opening a connection or coupling between a light source and the battery **1108.** The control circuit **1110** may in one embodiment also include the switch **1112.**

The switch **1112** allows the battery and/or control circuit **1110** to be bypassed and the regulated voltage to be passed to the input voltage node **1114.** The switch **1112** may allow for the controlling a connection between the light source **1118,** the battery **1108,** and the regulated voltage **1106.** The input voltage node **1114** may provide a voltage to a sensor **1116,** and/or a light source **1118.** The sensor **1116,** can be connected to a switch **1120** that may be connected to the light source **1118,** with all of these being coupled to a ground **1122.** The sensor **1116,** may include, but is not limited to, a light sensor, a photo resistor, a photodiode, and/or a phototransistor. The sensors **1116** may activate the switch **1120** allowing the light source **1118** to be activated. Directional indicator(s) **1119A** and/or 1119B (collectively **1119)** may also be coupled to the switch **1120.** In at least one embodiment, the directional indicator(s) **1119A** and/or **1119B** are light sources, and/or Light Emitting Diodes (LEDs). However, other light sources may also be utilized. The directional indicator **1119A** may in at least one example, be a right directional indicator, and indicator **1119B,** can in at least one example, be a left directional indicator. The directional indicators **1119** may be controlled and/or activated by a switch **1121A** and/or **1121B** (collectively **1121).** In at least one embodiment, the directional indicators **1119** may be controlled by a signle switch **1121.** The single switch may allow for the directional indicator(s) **1119** to be selected as a right only, left only, or both directional indicators.

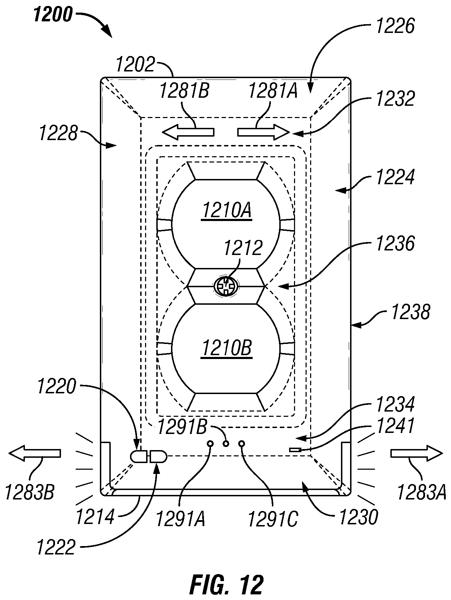

**FIG. 12** is a front view illustration of an outlet cover **1200.** The outlet cover **1200** can include a faceplate **1202.** The faceplate **1202** can have angled sections **1224, 1226, 1228,** and/or **1230.** The angled sections **1224, 1226, 1228,** and/or **1230** can provide support, and a housing for the light source **1214,** indicator **1220,** sensor **1222,** and/or other additional circuitry. The outlet cover **1200** can also have flat sections **1232,** and/or **1234** that can provide support, and a housing for directional indicators **1281A** and/or **1281B** (collectively **1281)** and/or directional indicators **1282A** and/or **1282B** (collectively **1282).** The light source **1214** may include Light Emitting Diode(s) (LED) or other light sources capabled of receiving power and/or electrical energy and converting it into a visible wavelength of light. The light source **1214** may extend along the bottom of the outlet cover **1200,** and extend along both sides of the outlet cover. The portion of the light source **1214** that extends along the side may emit on a wall (not illustrated) a side directional indicator **1283A** and/or **1283B.** Each of the side directional indicator **1283A** and/or **1283B** may be used individually or together, and be activated by a switch or directional control switch (not illustrated). In at least one example, the outlet cover **1200** may also have test apperaturs **1291A, 1291B,** and/or **1291C** (collectively **1291)** defined by one or more of said flat sections or angled sections. The test apperatures **1291** can allow for a testing device (not illustrated) to be utilized for verifying the strength of a power source coupled to the outlet cover **1200.**

The angled sections and the flat sections can also define the outlet openings **1210A** and/or **1210B.** In at least one example, the outlet cover **1200** can be secured with a fastener (not illusted) throught fastener opening **1212.** The outlet cover **1200** may also have a indicator **1020** that allows a user to know when the outlet cover **1200** is connected to an electrical power source. For example, the indicator may turn green when the outlet cover **1200** is connected to power, but may turn red or off when the outlet cover **1200** is not connected to power or there is a power outage. The outlet cover **1200** may also have a sensor **1222** for detecting the ambient light. For example, if the light in a room exceeds a threshold level as recorded and/or sensed by the sensor **1222** then the light source **1214** may be turned off. Alternatively, if the light in a room or location drops below a threshold level as recorded and/or sensed by the sensor **1222** then the light source **1214** may be turned on.

In at least one embodiment, when the light source **1214** is turned on one or more of the directional indicator(s) **1280,** and/or **1281** may also be activated. In another example, the sensor **1222** may also include an environmental quality sensor such as a smoke or air quality sensor that when triggered (the air quality is below a threshold value, or when a smoke senser detects smoke above a threadshold value) then both directional indicator **1280** and **1281** will turn on. It should be noted that a user (not illustrated) may select a single direction, right directional indicator **1280A** and/or **1281A,** a left directional indicator **1280B** and/or **1281B,** or both directions directional indicators **1280A, 1280B, 1281A,** and **1281B.** The outlet cover **1200** may also have a sound emitter **1241,** capable of producing an audible alarm or sound to indicate when there is a power outage, or if there is an environmental condition that a user (not illustrated) should be notified about. For example, when a fire and/or smoke is detected. In at least one example, the directional indicator(s) **1281** and/or **1283,** light source **1214,** indicator **1220** may be of various colors in the visible light spectrum. For example, the light source **1214** may provide a light output that is the color white, while the directional indicator(s) **1281** and/or **1283** may be red or white.

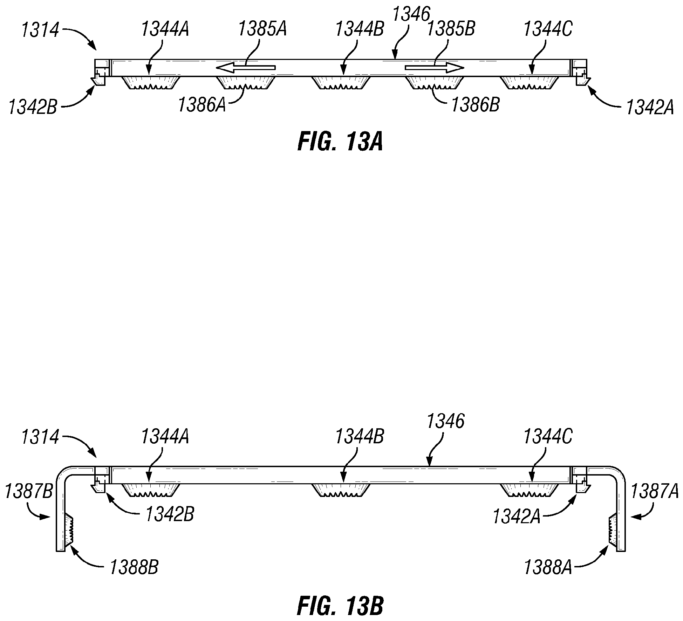

**FIG. 13A** is an illustration of a light source **1314** for an outlet cover. The light source **1314** can have light bulb(s) **1344A, 1344B,** and/or **1344C** that allow for light to be passed through a lens **1346.** In at least one example, the light bulb(s) **1344A, 1344B,** and/or **1344C** are Light Emitting Diode(s) (LEDs). The light source **1314** may also have indicator light bulb(s) **1386A** and/or **1386B.** The indicator light bulb(s) may pass through an arrow lens **1385A,** and/or **1385B.** The one or both of the indicator light bulb(s) **1386** and arrow lense(s) **1382** may be utilized to signal a user in a specific direction in the event of a power outage or other event. The light source **1314** may also have clip(s) **1342A** and/or **1342B** that allow for the light source to be secured to and/or within a outlet cover (not illustrated).

**FIG. 13B** is an illustration of an extended light source **1314** for an outlet cover. The light source **1314** can have light bulb(s) **1344A 1344B,** and/or **1344C** that allow for light to be passed through a lens **1346.** In at least one example, the light bulb(s) **1344A, 1344B,** and/or **1344C** are Light Emitting Diode(s) (LEDs). The light source **1314** may also have indicator light bulb(s) **1388A** and/or **1388B.** The light source **1314** may have extensions **1387A** and/or **1387B** that allow the light source **1314** to extend along the sides of an outlet cover (not illustrated). The extensions **1387A** and/or **1387B** may also include the indicator light bulb(s) **1388A** and/or **1388B** (collectively **1388).** In at least one example, the indicator light bulb(s) **1388** may be Light Emitting Diode(s) (LEDs) or other light emitting devices. The light source **1314** may also have clip(s) **1342A** and/or **1342B** that allow for the light source to be secured to and/or within a outlet cover (not illustrated).

While this disclosure has been particularly shown and described with reference to preferred embodiments, it will be understood by those skilled in the art that various changes in form and detail may be made therein without departing from the spirit and scope of the invention. The inventors expect skilled artisans to employ such variations as appropriate, and the inventors intend the disclosure to be practiced otherwise than as specifically described herein. Accordingly, this disclosure includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

While various embodiments in accordance with the principles disclosed herein have been described above, it should be understood that they have been presented by way of example only, and not limitation. Thus, the breadth and scope of this disclosure should not be limited by any of the above-described exemplary embodiments, but should be defined only in accordance with any claims and their equivalents issuing from this disclosure. Furthermore, the above advantages and features are provided in described embodiments, but shall not limit the application of such issued claims to processes and structures accomplishing any or all of the above advantages.

Additionally, the section headings herein are provided for consistency with the suggestions under 37 C.F.R. 1.77 or otherwise to provide organizational cues. These headings shall not limit or characterize the invention(s) set out in any claims that may issue from this disclosure. Specifically, and by way of example, although the headings refer to a "Technical Field," the claims should not be limited by the language chosen under this heading to describe the so-called field. Further, a description of a technology as background information is not to be construed as an admission that certain technology is prior art to any embodiment(s) in this disclosure. Neither is the "Brief Summary" to be considered as a characterization of the embodiment(s) set forth in issued claims. Furthermore, any reference in this disclosure to "invention" in the singular should not be used to argue that there is only a single point of novelty in this disclosure. Multiple embodiments may be set forth according to the limitations of the multiple claims issuing from this disclosure, and such claims accordingly define the embodiment(s), and their equivalents, that are protected thereby. In all instances, the scope of such claims shall be considered on their own merits in light of this disclosure, but should not be constrained by the headings set forth herein. The following clauses, which are not claims, may relate to one or more aspects or embodiments of the present invention:
Clause 1. An outlet cover comprising:
   a faceplate and a backplate;
   at least one arm having an electrical conductor extending from the backplate; a sensor for detecting ambient light;
   a light source attached to the outlet cover, wherein the light source further comprises at least one directional indicator;
   a control circuit having at least two operational modes and coupled to the light source; and
   a switch coupled to the control circuit for shifting between the at least two operational modes, wherein the at least two operational modes are an emergency lighting mode and a nightlight mode and during the nightlight mode the emergency lighting mode may still be utilized.
Clause 2. The outlet cover of clause 1, wherein the backplate is removably coupled to the faceplate.
Clause 3. The outlet cover of clause 1, wherein the faceplate and the backplate each define at least one outlet opening.
Clause 4. The outlet cover of clause 1, wherein the at least on arm is removably coupled to the backplate.
Clause 5. The outlet cover of clause 1, wherein the electrical conductor is coupled to the control circuit.
Clause 6. The outlet cover of clause 1, wherein the sensor is a photodiode.
Clause 7. The outlet cover of clause 1, wherein the light source is connected to a lens.
Clause 8. The outlet cover of clause 1, wherein the light source further comprises at least one LED.
Clause 9. The outlet cover of clause 1, further comprises a sound emitter.
Clause 10. The outlet cover of clause 1, further comprises a battery coupled to the control circuit.
Clause 11. The outlet cover of clause 1, further comprises a second switch for selecting a direction for the at least one directional indicator.
Clause 12. The outlet cover of clause 11, wherein the second switch may select from right, left or both for the at least one directional indicator.
Clause 13. A outlet cover system comprising:
   at least one electrical conductor for receiving a voltage from an incoming voltage source;
   a voltage regulation circuit to regulate the voltage from the incoming voltage source and generate a regulated voltage;
   a battery for storing energy from the regulated voltage;
   a light source connected by a control circuit to the battery and the regulated voltage, wherein the light source further comprises at least one directional indicator;
   at least one sensor coupled to the control circuit for detecting environmental conditions; and
   a switch connected to the control circuit for controlling a connection between the light source, the battery, and the regulated voltage.
Clause 14. The outlet cover system of clause 13, wherein the voltage regulation circuit includes a voltage regulator.
Clause 15. The outlet cover system of clause 13, wherein the at least one electrical conductor is coupled to the voltage regulation circuit.
Clause 16. The outlet cover system of clause 13, wherein the regulated voltage is a DC voltage.
Clause 17. The outlet cover system of clause 13, wherein the control circuit has at least two operational modes.
Clause 18. The outlet cover system of clause 17, wherein the at least two operational modes are an emergency lighting mode, and a nightlight mode.
Clause 19. The outlet cover system of clause 18, wherein the emergency lighting mode further comprises coupling the battery to the light source.
Clause 20. The outlet cover system of clause 13 further comprises a second switch for selecting a direction for the at least one directional indicator.

## Claims

1. An outlet cover comprising:
at least one plate having a front and a back, wherein one or more of the at least one plate is configured to fit over at least part of one of a light switch or an electrical outlet;
at least one arm comprising an electrical conductor extending rearward from the back of one or more of the at least one plate for receiving incoming electricity from an electrical source when the one or more of the at least one plate is affixed over the at least part of the light switch or the electrical outlet, and when the electrical source is electrically connected to the light switch or the electrical outlet;
a battery storing energy from the incoming electricity;
at least one light source configured to illuminate a region that is exterior to the outlet cover, wherein the at least one light source comprises a first light source configured to emit light in a downward direction and a second light source configured to emit light in a horizontal or intermediate direction; and
a control circuit electrically connected to the at least one light source, the at least one electrical conductor, and the battery,
wherein the control circuit is configured to:
in response to an ambient light condition and a first incoming electricity condition, power part or all of the at least one light source from the incoming electricity, and
in response to a second incoming electricity condition, power part or all of the at least one light source from the battery.

2. The outlet cover of claim 1, wherein the at least one plate comprises a faceplate and a backplate removable from the faceplate, the at least one arm extending rearwardly from the backplate.

3. The outlet cover of claim 2, wherein the at least one arm is removably coupled to the backplate.

4. The outlet cover of claim 1, wherein the at least one light source comprises at least one LED.

5. The outlet cover of claim 1, further comprising detecting the ambient light condition by one or more sensors.

6. The outlet cover of claim 5, wherein the one or more sensors comprises one or more of a photo resistor, a phototransistor, and/or a photodiode.

7. The outlet cover of claim 1, wherein the first incoming electricity condition comprises a presence of the incoming electricity, and the second incoming electricity condition comprises a loss of the incoming electricity.

8. The outlet cover of claim 7, wherein the outlet cover detects the second incoming electricity condition by a power detection circuit.

9. The outlet cover of claim 1, wherein the ambient light condition comprises a loss of light condition exterior to the outlet cover.

10. The outlet cover of claim 1, wherein the control circuit is further configured to, in response to a second ambient light condition and the first incoming electricity condition, not power the at least one light source.
